# EUROPÄISCHE PATENTANMELDUNG

(11) **EP 4 378 981 A1**
(43) Veröffentlichungstag der Anmeldung: **05.06.2024**
(21) Anmeldenummer: 23213474.2
(22) Anmeldetag: 30.11.2023
(51) Int. Cl.: C08J 5/04, C08L 101/16

(54) **POLYMILCHSÄURE BASIERTER MONOMATERIALVERBUNDWERKSTOFF MIT VERBESSERTER THERMISCHER BELASTBARKEIT**

(30) Priorität: 02.12.2022 DE 102022132037
(71) Anmelder: Fraunhofer-Gesellschaft zur Förderung der angewandten Forschung e.V., 80686 München (DE)
(72) Erfinder: TARKHANOV, Evgueni, 14476 Potsdam (DE); KILIAN, Sascha, 76327 Pfinztal-Berghausen (DE); LEHMANN, André, 14476 Potsdam (DE)
(74) Vertreter: Maiwald GmbH

(57) **Zusammenfassung**

Die vorliegende Erfindung betrifft ein Verbundwerkstoff auf Polymilchsäure-Basis in Gestalt eines Organobleches, welches eine PLA-Matrix umfasst, die durch ein eingebettetes Stereokomplex-PLA-Gewebe verstärkt wird.

## Beschreibung

### Technisches Feld

Die vorliegende Erfindung betrifft ein Verbundwerkstoff auf Polymilchsäure-Basis in Gestalt eines Organobleches, welches eine Matrix umfasst, die durch ein eingebettetes Gewebe verstärkt wird.

### Stand der Technik

Faserverstärkende Verbundwerkstoffe lassen sich generell in 2 Kategorien einteilen. Die erste Kategorie basiert auf dem Einbringen von Kurz- oder Langfasern in eine Matrix, wodurch es zur Verstärkung der Matrix kommt. Daraus lässt sich ein Granulat (Material) herstellen, das nachfolgend im Spritzgussprozess zu Formteilen prozessiert werden kann. Die zweite Kategorie sind die endlosfaserverstärkten Halbzeuge (Organobleche), in denen die Matrix kontinuierliche Filamente beinhaltet und die in Plattenform vorliegen.

Organobleche sind Faserverbundhalbzeuge mit textilen und kontinuierlichen Verstärkungsfasern, die in Gewebeform oder auch ondulationsfrei, unidirektional in einer thermoplastischen Matrix eingebettet vorliegen können. Üblicherweise werden hierfür Glas-, Kohlenstoff- oder Aramidfasergewebe mit unterschiedlichen Bindungsarten verwendet. Der Vorteil dieser Halbzeuge liegt in der thermischen Verformbarkeit, ähnlich dem Tiefziehen von metallischen Blechen. Der europäische Markt für endlosfaserverstärkte Thermoplaste umfasst aktuell ein Volumen von ca. 10 Kilotonnen pro Jahr (AVK - Der europäische Markt für Faserverstärkte Kunststoffe /Composites 2021).

Bei der Herstellung werden zwei grundsätzlich verschiedene Verfahrensvarianten angewendet.

Zum einen kann die Imprägnierung durch niedrigviskose reaktive Systeme, wie beispielsweise ε-Caprolactam für polyamidbasierte Systeme (Johns Manville) oder reaktive Methylmethacrylate (MMA) für polymethylmethacrylatbasierte Systeme (Elium - Arkema) erfolgen. Hierbei erfolgt die Polymerisation der thermoplastischen Matrix während der Imprägnierung des Halbzeuges.

Zum anderen kommen Schmelzimprägnierverfahren zum Einsatz, bei welchen ein bereits polymerisierter Thermoplast durch Temperatureintrag in eine schmelzflüssige Phase überführt wird. Typischerweise verwendete Thermoplaste sind technische Kunststoffe, wie Polypropylen (PP), Polyamid 6 (PA6), Polycarbonat (PC), jedoch auch Hochleistungskunststoffe wie Polyphenylensulfid (PPS), Polyetherimid (PEI), Polyetheretherketon (PEEK), oder Polyetherketonketon (PEKK). Hergestellt und vertrieben werden diese unter anderem durch Ensinger GmbH, LANXESS Deutschland GmbH, Mitsubishi Chemical Advanced Materials AG, Teijin Carbon Europe GmbH, Toray Advanced Composites (Toray TCAC Holding B.V.) oder Manna Green Momentum. Die Imprägnierung der textilen Halbzeuge erfolgt durch Druckeintrag, bspw. durch den Einsatz von Doppelbandpressen oder Intervallheizpressen.

Der Thermoplast kann hierbei in Pulverform durch Mahlen von Granulat, als Folie im Film-Stacking-Verfahren oder als Faser in einem verwobenen Mischgarn (commingled yarn) aus Matrix und Verstärkungsfaser vorliegen.

Die oben genannten Materialien sind aufgrund der thermoplastischen Matrix prinzipiell werkstofflich recyclingfähig, jedoch geht dies mit einer Einkürzung der Faserlänge und somit einer Reduktion der mechanischen Eigenschaften einher.

Um dies zu umgehen wurden flächige Halbzeuge basierend auf einem Monomaterialansatz entwickelt. Durch Verstrecken der Kunststoffe werden hochorientierte Polymermoleküle erhalten, wodurch eine richtungsabhängige Steigerung der mechanischen Eigenschaften erzielt werden kann.

Zwei Konzepte finden hierbei Anwendung in Serie.

Im ersten Verfahren, offenbart in US 2006186578AA (DIT Weaving) als auch in US 2004169304AA (Propex) wird ein Folienextrusionsprozess genutzt, bei welchem polypropylenbasierte Folien in Streifen geschnitten und anschließend verstreckt werden. Die so entstandenen Bänder bzw. Tapes werden verwoben und unter Einsatz von Druck und Temperatur zu flächigen Halbzeugen konsolidiert. US 2004169304 A1 offenbart ein Verfahren bei dem durch eine enge Prozessführung lediglich die Randschicht der Tapes angeschmolzen werden und sich dadurch die Matrix des Composites bildet.

US 2006186578 A1 offenbart einen Co-Extrusionsprozess, bei welchem die Folien bereits während der Folienextrusion mit einem niedrigschmelzenden Polypropylen Co-Polymer beschichtet werden. Während der Konsolidierung dient letztere als Matrix und weißt ein größeres Prozessfenster auf.

Im zweiten Verfahren, welches durch Comfil ApS kommerziell Verwendung findet, beruht das Kompositmaterial auf einer Faserverstärkung, ähnlich zu konventionellen Organoblechen. Hierbei werden Polymerfasern schmelzgesponnen und verstreckt. Anschließend werden diese Verstärkungsfasern in einem Commingling-Prozess (US 5792555 A; US 5688594 A) mit Fasern, die einen niedrigeren Schmelzpunkt aufweisen, jedoch auf dem gleichen Grundpolymer basieren, vermischt, verwoben und konsolidiert. Zwei Systeme, ersteres basierend auf HTPET und LPET und zweiteres entstanden im EU-Projekt BIO4Self (doi:10.1088/1757-899X/406/1/012038) basierend auf hoch und niedrig schmelzenden Polymilchsäuren (high und low melt PLA mit einem Schmelzpunktunterschied von ca. 20 K, BIO4M^{®}) werden durch Comfil ApS vertrieben. Polymilchsäure wird im Folgenden mit PLA abgekürzt.

JP2006111744 A1 beschreibt eine Harzzusammensetzung, die durch das Schmelzkneten von PLA (Matrix) und Stereokomplex PLA (Kurz-/Langfasern) erhalten werden kann. Des Weiteren wird die Herstellung von Formteilen im Spritzgussverfahren aus dem kurz- oder langfaserverstärkten Granulat (Material) beschrieben. Durch die Verwendung von geringen Fasergehalten (15 Gew.-%) und Schmelzknetverfahren, wodurch die Kurz-/Langfasern nicht direktional in der Matrix vorliegen, konnte die Schrumpfdynamik der Stereokomplex PLA-Filamente in Konsolidierungsprozessen bei Temperaturen von ≥ 180 °C weitestgehend außer Acht gelassen werden.

Für endlosfaserverstärkte Halbzeuge (Organobleche) kann sich die Schrumpfdynamik jedoch als prozessseitige Herausforderung herausstellen. Der Schrumpf der Stereokomplex PLA-Filamente kann dabei bis zu 10 % betragen und dadurch die notwendige parallele Ausrichtung der Filamente im Gewebe entsprechend erschweren.

Entsprechend können Erkenntnisse für faserverstärkende Verbundwerkstoffe der ersten Kategorie (Kurz- oder Langfasern in eine Matrix) nicht unmittelbar auf endlosfaserverstärkten Halbzeuge übertragen werden.

Ausgehend von den Nachteilen der bereits bekannten PLA-basierten Monomaterial-Verbundwerkstoffe liegt der vorliegenden Erfindung die Aufgabe zugrunde, einen PLA-basierten, endlosfaserverstärkten Monomaterial-Verbundwerkstoff mit einem höheren Schmelzpunktunterschied zwischen Matrix und Faser, sowie deutlich verbesserter thermischer Belastbarkeit zu gewährleisten, dessen Zug- und Energieabsorbtionseigenschaften einen weiten Bereich abdecken können, um unterschiedlichen Produktanforderungen zu genügen.

Durch intensive Forschung auf diesem Gebiet wird nun eine Lösung dieser Aufgabe durch die Kombination einer PLA-Matrix mit einem Stereokomplex-PLA-Gewebe offenbart.

### Zusammenfassung der Erfindung

Die Erfindung betrifft einen PLA-basierten Monomaterial-Verbundwerkstoff (Organoblech), welches ein Stereokomplex-PLA-Gewebe mit einem Schmelztemperaturmaximum im Bereich von 210 °C bis 240 °C und eine PLA-Matrix mit einem Schmelztemperaturmaximum im Bereich von 150 °C bis 180 °C umfasst.

Außerdem betrifft die Erfindung ein Verfahren zu Herstellung eines PLA-basierten Monomaterial-Organobleches wie hierin beschrieben, dadurch gekennzeichnet, dass das Verfahren die folgenden Schritte umfasst:
a) Bereitstellen eines Gewebes bestehend aus PLA Fasern und Stereokomplex-PLA Fasern, und
b) Pressen des Gewebes bei Temperaturen mindestens 5 °C unterhalb des Schmelztemperaturmaximums der Stereokomplex-PLA Fasern und mindestens 5 °C oberhalb des Schmelztemperaturmaximums der PLA Fasern bis die PLA Fasern geschmolzen sind.

Die Erfindung betrifft auch eine Verwendung des hierin beschriebenen PLA-basierten Monomaterial-Organoblechs für die Herstellung von Bauteilen für den Automobil- und/oder den Elektro-Haushaltsgeräte sektor.

### Detaillierte Beschreibung der Erfindung

Die Erfindung betrifft einen PLA-basierten Monomaterial-Verbundwerkstoff (Organoblech), welches ein Stereokomplex-PLA-Gewebe mit einem Schmelztemperaturmaximum im Bereich von 210 °C bis 240 °C und eine PLA-Matrix mit einem Schmelztemperaturmaximum im Bereich von 150 °C bis 180 °C umfasst.

### Stereokomplex-PLA

Der erfindungsgemäße PLA-basierte Monomaterial-Verbundwerkstoff umfasst ein Gewebe aus Stereokomplex-PLA.

Die Verstärkungsfasern aus Stereokomplex-PLA, aus denen das Stereokomplex-PLA-Gewebe besteht, stellen aufgrund der realisierten Stereokomplex-PLA Kristallstruktur ein höherschmelzendes System mit Schmelztemperaturen zwischen 210 °C und 240 °C dar.

Stereokomplex-PLA besteht aus einem racemischen Gemisch (1:1) aus Poly-L-Milchsäure und Poly-D-Milchsäure. Durch die nicht kovalenten Wechselwirkungen zwischen den Polymer-Enantiomeren kommt es zu einer Erhöhung der Schmelztemperatur der Stereokomplex-PLA im Vergleich zu konventioneller PLA.

Die Herstellung von Stereokomplex-PLA ist dem Fachmann bekannt.

In der Herstellung von Stereokomplex-PLA können Nukleierungsmittel verwendet werden. Entsprechend können die Stereokomplex-PLA Fasern geringe Mengen (< 5 Gew.-%) an Nukleierungsmittel umfassen.

Beispiele für die Herstellung sind die Mischung von Poly-L-Milchsäure und Poly-D-Milchsäure in der Schmelze oder Mischung von Poly-L-Milchsäure und Poly-D-Milchsäure-Lösungen und anschließendes Trocknen der Mischung.

Durch Variation der Verstärkungsfasereigenschaften, Verstärkungsfaseranteile, Gewebearchitektur oder der Gewebeschichtanzahl können die mechanischen Eigenschaften des erhaltenen Organoblechs beeinflusst werden.

Bevorzugt weisen die Stereokomplex-Fasern Festigkeiten im Bereich von 20 cN/tex bis 80 cN/tex, ermittelt durch Zugversuche nach DIN EN ISO 527, auf.

Das E-Modul der Stereokomplex-Fasern ist bevorzugt im Bereich von 300 cN/tex bis 1200 cN/tex, ermittelt durch Zugversuche nach DIN EN ISO 527.

Die Bruchdehnungen der Stereokomplex-Fasern liegen bevorzugt im Bereich von 15 % bis 200 %, ermittelt durch Zugversuche nach DIN EN ISO 527.

Je nach gewünschten Eigenschaften kann die Bindung des Stereokomplex-PLA-Gewebes ausgewählt werden aus der Liste bestehend aus Leinwand-Bindung, Panama-Bindung, Köper-Bindungen.

Auch die Anzahl der Stereokomplex-PLA-Gewebelagen kann je nach gewünschten Eigenschaften und Dicken des Organoblechs ausgewählt werden und liegt bevorzugt im Bereich von 1 bis 50, besonders bevorzugt 1 bis 10.

Das Flächengewicht (Verhältnis Masse zu Fläche) des Stereokomplex-PLA-Gewebes liegt bevorzugt im Bereich von 0.001 g/cm² bis 0.9 g/cm², noch bevorzugter im Bereich von 0.01 g/cm² bis 0.5 g/cm². Der Massenanteil des Stereokomplex-PLA-Gewebes bezogen auf das gesamte Gewicht des Monomaterial-Organoblechs liegt bevorzugt im Bereich von 40 Gew.-% bis 80 Gew.-%, besonders bevorzugt im Bereich von 40 Gew.-% bis 60 Gew.-%.

### PLA-Matrix

Außerdem umfasst der erfindungsgemäße PLA-basierte Monomaterial-Verbundwerkstoff eine PLA-Matrix mit einem Schmelztemperaturmaximum im Bereich von 150 °C bis 180 °C.

Die PLA-Matrix besteht dabei bevorzugt aus reiner Poly-L-Milchsäure oder aus reiner Poly-D-Milchsäure. Reine Poly-L-Milchsäure oder reine Poly-D-Milchsäure bedeuten in dieser Offenlegung, dass jeweils das andere Enantiomer in weniger als 2 Gew.-%, bevorzugt weniger als 1 Gew.-% vorliegt. Das heißt, die PLA-Matrix ist nicht wie das Stereokomplex-PLA Gewebe aus einer Mischung aus Poly-L-Milchsäure und Poly-D-Milchsäure aufgebaut.

Die PLA-Matrix kann im amorphen Zustand oder im teilkristallinen Zustand vorliegen.

Die PLA-Matrix kann zusätzlich geringe Mengen (< 5 Gew.-%) an Nukleierungsmittel umfassen, um die Kristallisationsdynamik beim Prozessieren zu beschleunigen. Bevorzugt umfasst die PLA-Matrix kein Nukleirungsmittel.

### PLA-basierter Monomaterial-Verbundwerkstoff (Organoblech)

Die Kombination aus Stereokomplex-PLA-Gewebe und PLA Matrix gewährleistet eine chemische Einheitlichkeit des Verbundwerkstoffes und bietet Schmelztemperaturunterschiede zwischen PLA-Matrix und Stereokomplex-PLA Fasern des Gewebes von bis zu 90 °C, was sich sehr vorteilhaft auf die Performance in einem Thermoumformprozess auswirken kann.

Bevorzugt ist der Schmelztemperaturunterschied zwischen Matrix und Fasern mindestens 30 °C, bevorzugt im Bereich von 30°C bis 90 °C, besonders bevorzugt im Bereich von 40°C bis 90°C und noch bevorzugter im Bereich von 50 °C bis 90 °C.

Der Massenanteil des Stereokomplex-PLA Gewebes zusammen mit der PLA-Matrix machen bevorzugt 90 Gew.-% bis 100 Gew.-%, besonders bevorzugt 95 Gew.-% bis 100 Gew.-%, noch bevorzugter im 98 Gew.-% bis 100 Gew.-% des Gesamtgewichtes des Organobleches aus.

In einer bevorzugten Ausführung der Erfindung besteht das Monomaterial-Organoblech nur aus Stereokomplex-PLA-Gewebe und PLA-Matrix.

Das Masseverhältnis des Stereokomplex-PLA-Gewebes zur PLA-Matrix liegt bevorzugt im Bereich von 1:1.5 bis 4:1, besonders bevorzugt im Bereich von 1:1.5 bis 1.5:1.

Die Dicke des erfindungsgemäßen Organobleches kann im Bereich von 0.1 mm bis 10 mm, bevorzugt 0.2 mm bis 5 mm, besonders bevorzugt 0.5 mm bis 2 mm liegen.

Das erfindungsgemäße Organoblech kann außerdem durch die Zugeigenschaften in Faserrichtung beschrieben werden.

Bevorzugt hat das Organoblech eine Festigkeit im Bereich von 20 MPa bis 200MPa, noch bevorzugter 30 MPa bis 150 MPa, ermittelt durch Zugversuche nach DIN EN ISO 527.

Das E-Modul ist bevorzugt im Bereich von 0,2 GPa bis 10 GPa, noch bevorzugter 1 bis 8 GPa, ermittelt durch Zugversuche nach DIN EN ISO 527.

Bevorzugt ist die Bruchdehnung des Organoblechs im Bereich von 5 % bis 50%, ermittelt durch Zugversuche nach DIN EN ISO 527.

Herstellungsverfahren von Organoblechen sind dem Fachmann bekannt. Beispielhaft kann das erfindungsgemäße PLA-basierte Monomaterial-Organoblech durch eine Polymerisation der thermoplastischen Matrix während der Imprägnierung mit dem Gewebe oder durch ein Schmelzimprägnierverfahren erhalten werden.

### Verfahren zur Herstellung des PLA-basierten Monomaterial-Organoblechs

Die Erfindung betrifft außerdem ein Verfahren zur Herstellung eines PLA-basierten Monomaterial-Organoblechs wie oben oder unten beschrieben, dadurch gekennzeichnet, dass das Verfahren die folgenden Schritte umfasst:
a) Bereitstellen eines Gewebes bestehend aus PLA Fasern und Stereokomplex-PLA Fasern, und
b) Pressen des Gewebes bei Temperaturen mindestens 5 °C unterhalb des Schmelztemperaturmaximums der Stereokomplex-PLA Fasern und mindestens 5 °C oberhalb des Schmelztemperaturmaximums der PLA Fasern bis die PLA Fasern geschmolzen sind.

Durch das Pressen bei erhöhter Temperatur in Schritt b) entsteht ein Polymilchsäure-basiertes Monomaterial-Organoblech mit einer PLA-Matrix und einem Stereokomplex-PLA-Gewebe.

Die Temperatur in diesem Verfahren liegt bevorzugt im Bereich von 155 °C bis 235 °C, besonders bevorzugt im Bereich von 170 °C bis 200 °C.

Die Erfindung betriff außerdem die Verwendung des erfindungsgemäßen Polymilchsäure-basierten Monomaterial-Organoblechs für die Herstellung von Bauteilen für den Automobil- und/oder den Elektro-Haushaltsgerätesektor.

Des Weiteren wird die Erfindung durch die folgenden Punkte beschrieben.

Punkt 1: Ein Polymilchsäure-basiertes Monomaterial-Organoblech, dadurch gekennzeichnet, dass das Organoblech ein Stereokomplex-PLA-Gewebe mit einem Schmelztemperaturmaximum im Bereich von 210 °C bis 240 °C und eine PLA-Matrix mit einem Schmelztemperaturmaximum im Bereich von 150 °C bis 180 °C umfasst.

Punkt 2: Das PLA-basierte Monomaterial-Organoblech nach Punkt 1, dadurch gekennzeichnet, dass der Schmelztemperaturunterschied zwischen PLA-Matrix und Stereokomplex-PLA-Gewebe mindestens 30 °C, bevorzugt im Bereich von 30°C bis 90 °C, besonders bevorzugt im Bereich von 40°C bis 90°C und noch bevorzugter im Bereich von 50 °C bis 90 °C liegt.

Punkt 3: Das PLA-basierte Monomaterial-Organoblech nach den Punkten 1 oder 2, dadurch gekennzeichnet, dass das Organoblech nur ein Polymer-Gewebe und eine Polymer-Matrix umfasst, wobei das Polymer-Gewebe ein Stereokomplex-PLA-Gewebe und die Polymer-Matrix eine PLA-Matrix ist.

Punkt 4: Das PLA-basierte Monomaterial-Organoblech nach einem der vorherigen Punkte, dadurch gekennzeichnet, dass der Massenanteil des Stereokomplex-PLA-Gewebes im Bereich von 40 Gew.-% bis 80 Gew.-%, bevorzugt im Bereich von 40 Gew.-% bis 60 Gew.-% bezogen auf das Gesamtgewicht des Organobleches liegt.

Punkt 5: Das PLA-basierte Monomaterial-Organoblech nach einem der vorherigen Punkte, dadurch gekennzeichnet, dass der Massenanteil des Stereokomplex-PLA-Gewebes und der PLA-Matrix zusammen im Bereich von 90 Gew.-% bis 100 Gew.-%, bevorzugt im Bereich von 95 Gew.-% bis 100 Gew.-%, besonders bevorzugt im Bereich von 98 Gew.-% bis 100 Gew.-% bezogen auf das Gesamtgewicht des Organobleches liegt.

Punkt 6: Das PLA-basierte Monomaterial-Organoblech nach einem der vorherigen Punkte, dadurch gekennzeichnet, dass das Masseverhältnis von Stereokomplex-PLA-Gewebe zu PLA-Matrix im Bereich von 1:1.5 bis 4:1, bevorzugt im Bereich von 1:1.5 bis 1.5:1 liegt.

Punkt 7: Das PLA-basierte Monomaterial-Organoblech nach einem der vorherigen Punkte, dadurch gekennzeichnet, dass das Organoblech eine Dicke im Bereich von 0.1 mm bis 10 mm, bevorzugt 0.2 mm bis 5 mm, besonders bevorzugt 0.5 mm bis 2 mm aufweist.

Punkt 8: Das PLA-basierte Monomaterial-Organoblech nach einem der vorherigen Punkte, dadurch gekennzeichnet, dass das Organoblech 1 bis 50 Stereokomplex-PLA-Gewebelagen, bevorzugt 1 bis 10 Stereokomplex-PLA-Gewebelagen umfasst.

Punkt 9: Das PLA-basierte Monomaterial-Organoblech nach einem der vorherigen Punkte, dadurch gekennzeichnet, dass das Stereokomplex-PLA-Gewebe ein Flächengewicht im Bereich von 0.001 g/cm² bis 0.9 g/cm², bevorzugt im Bereich von 0.01 g/cm² bis 0.5 g/cm² aufweist.

Punkt 10: Das PLA-basierte Monomaterial-Organoblech nach einem der vorherigen Punkte, dadurch gekennzeichnet, dass die Stereokomplex-PLA-Fasern Festigkeiten im Bereich von 20 cN/tex bis 80 cN/tex, ermittelt durch Zugversuche nach DIN EN ISO 527, aufweisen.

Punkt 11. Das PLA-basierte Monomaterial-Organoblech nach einem der vorherigen Punkte, dadurch gekennzeichnet, dass die Stereokomplex-PLA-Fasern E-Module im Bereich von 300 cN/tex bis 1200 cN/tex, ermittelt durch Zugversuche nach DIN EN ISO 527, aufweisen.

Punkt 12: Das PLA-basierte Monomaterial-Organoblech nach einem der vorherigen Punkte, dadurch gekennzeichnet, dass die Stereokomplex-PLA-Fasern Bruchdehnungen im Bereich von 15 % bis 200 %, ermittelt durch Zugversuche nach DIN EN ISO 527, aufweisen.

Punkt 13: Das PLA-basierte Monomaterial-Organoblech nach einem der vorherigen Punkte, dadurch gekennzeichnet, dass das Stereokomplex-PLA-Gewebe aus einem racemischen Gemisch aus Poly-L-Milchsäure und Poly-D-Milchsäure besteht.

Punkt 14: Das PLA-basierte Monomaterial-Organoblech nach einem der vorherigen Punkte, dadurch gekennzeichnet, dass die Bindung des Stereokomplex-PLA-Gewebes ausgewählt ist aus der Liste bestehend aus Leinwand-Bindung, Panama-Bindung und Köper-Bindung.

Punkt 15: Das PLA-basierte Monomaterial-Organoblech nach einem der vorherigen Punkte, dadurch gekennzeichnet, dass das Organoblech in Faserrichtung eine Festigkeit im Bereich von 20 MPa bis 200MPa, bevorzugt 30 MPa bis 150 MPa, ermittelt durch Zugversuche nach DIN EN ISO 527, besitzt.

Punkt 16: Das PLA-basierte Monomaterial-Organoblech nach einem der vorherigen Punkte, dadurch gekennzeichnet, dass das Organoblech in Faserrichtung ein E-Modul im Bereich von 0,2 GPa bis 10 GPa, bevorzugt 1 GPa bis 8 GPA, ermittelt durch Zugversuche nach DIN EN ISO 527, besitzt.

Punkt 17: Das PLA-basierte Monomaterial-Organoblech nach einem der vorherigen Punkte, dadurch gekennzeichnet, dass das Organoblech in Faserrichtung eine Bruchdehnung im Bereich von 5 % bis 50%, ermittelt durch Zugversuche nach DIN EN ISO 527, besitzt.

Punkt 18: Das PLA-basierte Monomaterial-Organoblech nach einem der vorherigen Punkte, dadurch gekennzeichnet, dass die PLA-Matrix des Organobleches im amorphen Zustand oder im teilkristallinen Zustand vorliegt.

Punkt 19: Verfahren zu Herstellung eines PLA-basierten Monomaterial-Organobleches nach einem der vorherigen Punkte, dadurch gekennzeichnet, dass das Verfahren die folgenden Schritte umfasst:
a) Bereitstellen eines Gewebes bestehend aus PLA Fasern und Stereokomplex-PLA Fasern, und
b) Pressen des Gewebes bei Temperaturen mindestens 5 °C unterhalb des Schmelztemperaturmaximums der Stereokomplex-PLA Fasern und mindestens 5 °C oberhalb des Schmelztemperaturmaximums der PLA Fasern bis die PLA Fasern geschmolzen sind.

Punkt 20: Das Verfahren nach Punkt 19, dadurch gekennzeichnet, dass die Temperatur in Schritt b) im Bereich von 155 °C bis 235 °C, bevorzugt im Bereich von 170 °C bis 200 °C liegt.

Punkt 21: Verwendung eines PLA-basierten Monomaterial-Organoblechs nach einem der Punkte 1 bis 18 für die Herstellung von Bauteilen für den Automobil- und/oder den Elektro-Haushaltsgeräte sektor.

### Ausführungsbeispiele:

### Generelle Versuchsdurchführung:

PLA Fasern und Stereokomplex-PLA Fasern werden mit einander in ein Gewebe verwoben und anschließend bei 180 °C gepresst. Dabei kommt es zur Schmelze der PLA Fasern und es wird ein Monomaterial-Organoblech erhalten, das sich aus einer PLA-Matrix und einem Stereokomplex-PLA Gewebe zusammensetzt.

### Beispiel 1:

PLA-basiertes Monomaterial-Organoblech mit einer Dicke von 1.5 mm, das sich aus einer amorphen PLA-Matrix (Schmelztemperaturmaximum von 175 °C) und einem 1-lagigen Stereokomplex-PLA Gewebe (Schmelztemperaturmaximum von 230 °C) mit einer Panamabindung im Masseverhältnis von 1: 1 zusammensetzt.

Das Gewebe (Flächengewicht_{Gewebe} 0.093 g/cm²) besteht aus einem dtex10437f4200-Multifilamentgarn (Garnfeinheit 10437 dtex, 4200 Filamente) mit folgenden textil-physikalischen Eigenschaften der Stereokomplex-PLA-Einzelfilamente:
Zugfestigkeit σₘₐₓ = 22 cN/tex; E-Modul E = 326 cN/tex; Bruchdehnung εₘₐₓ = 26 %

Das Eigenschaftsprofil dieses PLA-basierten Monomaterial-Organobleches (Tabelle 1) zeichnet sich insbesondere durch seine hohe Bruchdehnung aus, was mit Hinblick auf die Energieabsorbtion einen hohen Stellenwert hat.

**Tabelle 1: Im Zugversuch (DIN EN ISO 527) ermittelte textil-physikalische Kennwerte (Beispiel 1).**

| **Zugfestigkeit [MPa]** | **E-Modul [GPa]** | **Bruchdehnung [%]** |
|---|---|---|
| 31.9 ± 3.2 | 1.29 ± 0.14 | 21.6 ± 1.8 |

### Beispiel 2:

Ein PLA-basiertes Monomaterial-Organoblech mit einer Dicke von 1.5 mm, das sich aus einer teilkristallinen PLA-Matrix (Schmelztemperaturmaximum von 175 °C) und einem 1-lagigen Stereokomplex-PLA Gewebe (Schmelztemperaturmaximum von 230 °C) mit einer Panamabindung im Masseverhältnis von 1: 1 zusammensetzt.

Das Gewebe (Flächengewicht_{Gewebe} 0.093 g/cm²) besteht aus einem dtex10437f4200-Multifilamentgarn (Garnfeinheit 10437 dtex, 4200 Filamente) mit folgenden textil-physikalischen Eigenschaften der Stereokomplex-PLA-Einzelfilamente:
Zugfestigkeit σₘₐₓ = 22 cN/tex; E-Modul E = 326 cN/tex; Bruchdehnung εₘₐₓ = 26 %

Im Vergleich zum zuvor beschriebenen Beispiel 1 liegt hier die Matrix in einem teilkristallinen Zustand vor, was vorrangig Auswirkungen auf den E-Modul sowie die Bruchdehnung zeigt (Tabelle 2).

**Tabelle 2: Im Zugversuch (DIN EN ISO 527) ermittelte textil-physikalische Kennwerte (Beispiel 2).**

| **Zugfestigkeit [MPa]** | **E-Modul [GPa]** | **Bruchdehnung [%]** |
|---|---|---|
| 30.1 ± 1.6 | 1.42 ± 0.06 | 19.3 ± 2.4 |

### Beispiel 3:

Ein PLA-basiertes Monomaterial-Organoblech mit einer Dicke von 0.7 mm, das sich aus einer amorphen PLA-Matrix (Schmelztemperaturmaximum von 175 °C) und einem 3-lagigen Stereokomplex-PLA Gewebe (Schmelztemperaturmaximum von 230 °C) mit einer Leinwandbindung im Masseverhältnis von 1: 1 zusammensetzt.

Weiterhin bestehen die einzelnen feinen Gewebeschichten (Flächengewicht_{Gewebe} 0.015 g/cm²) aus einem dtex1072f576-Multifilamentgarn (Garnfeinheit 1072 dtex, 576 Filamente) mit verbesserten textil-physikalischen Eigenschaften der Stereokomplex-PLA-Einzelfilmanete:
Zugfestigkeit σₘₐₓ = 34 cN/tex; E-Modul E = 488 cN/tex; Bruchdehnung εₘₐₓ = 20.5 %

Die Gegenwart einer mehrlagigen Gewebestruktur sowie widerstandsfähigerer Stereokomplex-PLA-Multifilamentgarne im Gewebe führt zu einer signifikanten Zunahme der Zugfestigkeits- und E-Modul-Werte sowie einer Abnahme der Bruchdehnung im Vergleich zu den Beispielen 1 und 2.

**Tabelle 3: Im Zugversuch (DIN EN ISO 527) ermittelte textil-physikalische Kennwerte (Beispiel 3).**

| **Zugfestigkeit [MPa]** | **E-Modul [GPa]** | **Bruchdehnung [%]** |
|---|---|---|
| 45.3 ± 3.9 | 2.69 ± 0.01 | 8.6 ± 2 |

### Beispiel 4:

Ein PLA-basiertes Monomaterial-Organoblech mit einer Dicke von 0.9 mm, das sich aus einer amorphen PLA-Matrix (Schmelztemperaturmaximum von 175 °C) und einem 4-lagigen Stereokomplex-PLA Gewebe (Schmelztemperaturmaximum von 230 °C) mit einer Leinwandbindung im Masseverhältnis von 1:1 zusammensetzt.

Die einzelnen feinen Gewebeschichten (Flächengewicht_{Gewebe} 0.02 g/cm²) bestehen aus einem dtex1072f576-Multifilamentgarn (Garnfeinheit 1072 dtex, 576 Filamente) mit folgenden textil-physikalischen Eigenschaften der Stereokomplex-PLA-Einzelfilamente:
Zugfestigkeit σₘₐₓ = 34 cN/tex; E-Modul E = 488 cN/tex; Bruchdehnung εₘₐₓ = 20.5 % Beispiel 4 unterscheidet sich von Beispiel 3 dadurch, dass hier eine Gewebeschicht mehr vorliegt, sodass die Dicke des Organobleches dadurch größer ist.

Aus dem Vergleich der textil-physikalischen Kennwerte der Beispiele 3 (Tabelle 3) und 4 ( Tabelle 4) wird deutlich, dass das Hinzufügen einer Gewebelage die Zugeigenschaften des PLA-basierten Monomaterial-Organobleches verbessert.

**Tabelle 4: Im Zugversuch (DIN EN ISO 527) ermittelte textil-physikalische Kennwerte (Beispiel 4).**

| **Zugfestigkeit [MPa]** | **E-Modul [GPa]** | **Bruchdehnung [%]** |
|---|---|---|
| 57.4 ± 6.4 | 3.09 ± 0.22 | 10 ± 1.8 |

### Beispiel 5:

Ein PLA-basiertes Monomaterial-Organoblech mit einer Dicke von 0.9 mm, das sich aus einer amorphen PLA-Matrix (Schmelztemperaturmaximum von 175 °C) und einem 4-lagigen Stereokomplex-PLA Gewebe (Schmelztemperaturmaximum von 230 °C) mit einer 3/1-Köperbindung im Masseverhältnis von 1: 1 zusammensetzt.

Die einzelnen feinen Gewebeschichten (Flächengewicht_{Gewebe} 0.02 g/cm²) bestehen aus einem dtex1072f576-Multifilamentgarn (Garnfeinheit 1072 dtex, 576 Filamente) mit folgenden textil-physikalischen Eigenschaften der Stereokomplex-PLA-Einzelfilmanete:
Zugfestigkeit σₘₐₓ = 34 cN/tex; E-Modul E = 488 cN/tex; Bruchdehnung εₘₐₓ = 20.5 %

Im Unterschied zum Beispiel 4 beschreibt das vorliegende Beispiel 5 ein System mit einer 3/1-Köper-Bindung, die mit Hinblick auf die Ondulation in Längs- und Querrichtung nicht identisch ist.

Textil-physikalische Kennwerte des vorliegenden Beispiels ( Tabelle 5) lassen deutlich erkennen, dass die Zugeigenschaften in Längs- und Querrichtung aufgrund unterschiedlicher Ondulation sich stark unterscheiden.

**Tabelle 5: Im Zugversuch (DIN EN ISO 527) ermittelte textil-physikalische Kennwerte (Beispiel 5).**

| | **Zugfestigkeit [MPa]** | **E-Modul [GPa]** | **Bruchdehnung [%]** |
|---|---|---|---|
| Längsrichtung | 57 ± 1.7 | 3.03 ± 0.15 | 9 ± 0.8 |
| Querrichtung | 46 ± 3.5 | 2.88 ± 0.18 | 6.9 ± 1.2 |

### Beispiel 6:

Ein PLA-basiertes Monomaterial-Organoblech mit einer Dicke von 1.5 mm, das sich aus einer amorphen PLA-Matrix (Schmelztemperaturmaximum von 175 °C) und einem 1-lagigen Stereokomplex-PLA Gewebe (Schmelztemperaturmaximum von 230 °C) mit einer Panamabindung im Masseverhältnis von 4:1 zusammensetzt.

Das Gewebe (Flächengewicht_{Gewebe} 0.095 g/cm²) besteht aus einem dtex10660f2898-Multifilamentgarn (Garnfeinheit 10660 dtex, 2898 Filamente) mit folgenden textil-physikalischen Eigenschaften der Stereokomplex-PLA-Einzelfilamente:
Zugfestigkeit σₘₐₓ = 21 cN/tex; E-Modul E = 405 cN/tex; Bruchdehnung εₘₐₓ = 28 %

Tabelle 6 zeigt das Eigenschaftsprofil dieses PLA-basierten Monomaterial-Organoblechs. Verglichen mit den Beispielen 1 und 2 besitzt das Organoblech, trotz eines höheren E-Moduls der Stereokomplex PLA-Fasern, eine ähnliche Zugfestigkeit und E-Modul. Weiterhin kommt es aufgrund des geringen vorliegenden Stereokomplex PLA-Fasergehaltes (20 Gew.-%) im Stereokomplex PLA-PLA-Mischgewebe zu einer verringerten Bruchdehnung.

**Tabelle 6: Im Zugversuch (DIN EN ISO 527) ermittelte textil-physikalische Kennwerte (Beispiel 6).**

| **Zugfestigkeit [MPa]** | **E-Modul [GPa]** | **Bruchdehnung [%]** |
|---|---|---|
| 33.2 ± 3.6 | 1.45 ± 0.18 | 7.8 ± 0.7 |

Der geringe Stereokomplex PLA-Fasergehalt führt dazu, dass ein schrumpfbedingtes Verrutschen des Stereokomplex PLA-Gewebes innerhalb der PLA-Matrix während des Konsolidierungsprozesses nicht verhindert werden kann, wodurch die Stereokomplex PLA-Fasern den Verstärkungseffekt nicht in vollem Umfang realisieren können.

## Patentansprüche

1. Ein Polymilchsäure-basiertes Monomaterial-Organoblech, **dadurch gekennzeichnet, dass** das Organoblech ein Stereokomplex-PLA-Gewebe mit einem Schmelztemperaturmaximum im Bereich von 210 °C bis 240 °C und eine PLA-Matrix mit einem Schmelztemperaturmaximum im Bereich von 150 °C bis 180 °C umfasst.

2. Das PLA-basierte Monomaterial-Organoblech nach Anspruch 1, **dadurch gekennzeichnet, dass** der Schmelztemperaturunterschied zwischen PLA-Matrix und Stereokomplex-PLA-Gewebe mindestens 30 °C, bevorzugt im Bereich von 30°C bis 90 °C, besonders bevorzugt im Bereich von 40°C bis 90°C und noch bevorzugter im Bereich von 50 °C bis 90 °C liegt.

3. Das PLA-basierte Monomaterial-Organoblech nach den Ansprüchen 1 oder 2, **dadurch gekennzeichnet, dass** das Organoblech nur ein Polymer-Gewebe und eine Polymer-Matrix umfasst, wobei das Polymer-Gewebe ein Stereokomplex-PLA-Gewebe und die Polymer-Matrix eine PLA-Matrix ist.

4. Das PLA-basierte Monomaterial-Organoblech nach einem der vorherigen Ansprüche, **dadurch gekennzeichnet, dass** der Massenanteil des Stereokomplex-PLA-Gewebes im Bereich von 40 Gew.-% bis 80 Gew.-%, bevorzugt im Bereich von 40 Gew.-% bis 60 Gew.-% bezogen auf das Gesamtgewicht des Organobleches liegt.

5. Das PLA-basierte Monomaterial-Organoblech nach einem der vorherigen Ansprüche, **dadurch gekennzeichnet, dass** der Massenanteil des Stereokomplex-PLA-Gewebes und der PLA-Matrix zusammen im Bereich von 90 Gew.-% bis 100 Gew.-%, bevorzugt im Bereich von 95 Gew.-% bis 100 Gew.-%, besonders bevorzugt im Bereich von 98 Gew.-% bis 100 Gew.-% bezogen auf das Gesamtgewicht des Organobleches liegt.

6. Das PLA-basierte Monomaterial-Organoblech nach einem der vorherigen Ansprüche, **dadurch gekennzeichnet, dass** das Masseverhältnis von Stereokomplex-PLA-Gewebe zu PLA-Matrix im Bereich von 1:1.5 bis 4:1, bevorzugt im Bereich von 1: 1.5 bis 1.5:1 liegt.

7. Das PLA-basierte Monomaterial-Organoblech nach einem der vorherigen Ansprüche, **dadurch gekennzeichnet, dass** das Organoblech 1 bis 50, bevorzugt 1 bis 10 Stereokomplex-PLA-Gewebelagen umfasst.

8. Das PLA-basierte Monomaterial-Organoblech nach einem der vorherigen Ansprüche, **dadurch gekennzeichnet, dass** das Stereokomplex-PLA-Gewebe ein Flächengewicht im Bereich von 0.001 g/cm² bis 0.9 g/cm², bevorzugt im Bereich von 0.01 g/cm² bis 0.5 g/cm² aufweist.

9. Das PLA-basierte Monomaterial-Organoblech nach einem der vorherigen Ansprüche, **dadurch gekennzeichnet, dass** die Stereokomplex-PLA-Fasern Festigkeiten im Bereich von 20 cN/tex bis 80 cN/tex und/oder E-Module im Bereich von 300 cN/tex bis 1200 cN/tex und/oder Bruchdehnungen im Bereich von 15 % bis 200 %, ermittelt durch Zugversuche nach DIN EN ISO 527, aufweisen.

10. Das PLA-basierte Monomaterial-Organoblech nach einem der vorherigen Ansprüche, **dadurch gekennzeichnet, dass** die Bindung des Stereokomplex-PLA-Gewebes ausgewählt ist aus der Liste bestehend aus Leinwand-Bindung, Panama-Bindung und Köper-Bindung.

11. Das PLA-basierte Monomaterial-Organoblech nach einem der vorherigen Ansprüche, **dadurch gekennzeichnet, dass** das Organoblech in Faserrichtung eine Festigkeit im Bereich von 20 MPa bis 200MPa, bevorzugt 30 MPa bis 150 MPa, ermittelt durch Zugversuche nach DIN EN ISO 527, besitzt.

12. PLA-basierte Monomaterial-Organoblech nach einem der vorherigen Ansprüche, **dadurch gekennzeichnet, dass** das Organoblech in Faserrichtung ein E-Modul im Bereich von 0,2 GPa bis 10 GPa, bevorzugt 1 GPa bis 8 GPA, ermittelt durch Zugversuche nach DIN EN ISO 527, und eine Bruchdehnung im Bereich von 5 % bis 50%, ermittelt durch Zugversuche nach DIN EN ISO 527, besitzt.

13. Verfahren zu Herstellung eines PLA-basierten Monomaterial-Organobleches nach einem der vorherigen Ansprüche, **dadurch gekennzeichnet, dass** das Verfahren die folgenden Schritte umfasst:
a) Bereitstellen eines Gewebes bestehend aus PLA Fasern und Stereokomplex-PLA Fasern, und
b) Pressen des Gewebes bei Temperaturen mindestens 5 °C unterhalb des Schmelztemperaturmaximums der Stereokomplex-PLA Fasern und mindestens 5 °C oberhalb des Schmelztemperaturmaximums der PLA Fasern bis die PLA Fasern geschmolzen sind.

14. Das Verfahren nach Anspruch 13, **dadurch gekennzeichnet, dass** die Temperatur in Schritt b) im Bereich von 155 °C bis 235 °C, bevorzugt im Bereich von 170 °C bis 200 °C liegt.

15. Verwendung eines PLA-basierten Monomaterial-Organoblechs nach einem der Ansprüche 1 bis 12 für die Herstellung von Bauteilen für den Automobil- und/oder den Elektro-Haushaltsgeräte sektor.
